# EUROPEAN PATENT SPECIFICATION

(11) **EP 2 376 757 B1**
(45) Date of publication and mention of the grant of the patent: **14.11.2012**
(21) Application number: 09760962.2
(22) Date of filing: 25.11.2009
(51) Int. Cl.: F02B 37/007, F02B 37/013

(54) **TWO- STAGE TURBOCHARGER ASSEMBLY**
ZWEISTUFIGE TURBOLADERANORDNUNG
ENSEMBLE TURBOCOMPRESSEUR BI-ÉTAGE

(30) Priority: 12.01.2009 GB 0900427
(43) Date of publication of application: 19.10.2011
(73) Proprietor: Napier Turbochargers Limited, Lincoln, Lincolnshire LN5 7FD (GB)
(72) Inventor: HEYES, Francis, Joseph, Geoffrey, Lincoln LN2 1RG (GB)
(74) Representative: Gill, Stephen Charles
(86) International application number: PCT/GB2009/002752
(87) International publication number: WO 2010/079313

(56) References cited:
- EP-A1- 1 388 654
- CA-A1- 2 526 370
- DE-A1- 4 330 525
- DE-C1- 4 434 777
- GB-A- 2 321 502
- US-A1- 2002 056 444

## Description

### Field of the Invention

The present invention relates to a two-stage turbocharger assembly.

### Background of the Invention

In order to reduce NOₓ and CO₂ emissions, it is known to use Miller timing for industrial diesel engines. Such engines require high pressure ratio turbochargers, well in excess of those presently available from single stage turbochargers. See, for example, Wik, C. and Hallback, B. "Utilisation of 2-stage turbo charging as an emission reduction mean on a Wartsila 4-stroke medium-speed diesel engine", Paper 101, CIMAC Congress, Vienne, 2007.

Conventional methods of achieving higher pressure ratios are summarised in Figure 13 of Codan, E. and Mathey, C. "Emissions - A new Challenge for Turbocharging" Paper 245, CIMAC Congress, Vienne, 2007. One approach employs a two-stage turbocharger assembly based on two separate turbochargers of conventional design: a larger low pressure (LP) turbocharger which takes air from atmosphere and delivers intermediate pressure air to an intercooler, and a smaller high pressure (HP) turbocharger which takes the intermediate pressure air from the intercooler and delivers high pressure air to the engine charge air cooler. The exhaust from the engine is ducted to the HP turbocharger turbine (to drive the HP compressor) and thence to the LP turbocharger turbine (to drive the LP compressor).

Particularly when using Miller timing, it is desirable to be able to vary the compressor and turbine characteristics of the turbocharger assembly to provide engine control at low loads.

One way of achieving this is to adopt a variable geometry HP turbine in which stator vanes close to the turbine throat are moved. However, the use of heavy fuel oil as an engine fuel can lead to high levels of ash deposits in the HP turbine. This can make the effective use of a variable geometry HP turbine difficult.

Typically, the HP stage has a lower pressure ratio than the LP stage. This ensures that the size of the LP stage can be maintained as no bigger than a typical single stage turbocharger with lower degrees of Miller timing. At varying engine loads, the HP pressure ratio is typically constant, whereas the LP turbocharger pressure ratio increases substantially with engine load. Nevertheless, during engine transients, acceleration tends to be taken on the smaller HP stage. Turbo-lag can therefore be dominated by the inertia of the HP stage.

DE 102006011188 A proposes a turbocharger assembly in which two HP turbochargers are arranged parallel to each other.

GB 2294729 A proposes a turbocharger assembly in which two LP turbochargers are arranged parallel to each other.

### Summary of the Invention

In general terms, the present invention provides a two-stage turbocharger assembly a low pressure turbocharger, and a plurality of HP turbochargers arranged in parallel with each other.

A first aspect if the invention provides a two-stage turbocharger assembly for an internal combustion engine, the assembly having:
an LP turbocharger, and
a plurality of HP turbochargers arranged in parallel with each other, the compressor outlet of the LP turbocharger being operatively connected to the compressor inlets of the HP turbochargers, and the turbine outlets of the HP turbochargers being operatively connected to the turbine inlet of the LP turbocharger;
wherein the assembly has more than two of the HP turbochargers.

The assembly may have any one, or to the extent that they are compatible, any combination of the following optional features.

Preferably, the assembly has four or more of the HP turbochargers. More preferably, the assembly has six or more, or eight or more, of the HP turbochargers.

By employing a relatively large number of parallel HP turbochargers, smaller HP turbochargers can be used and their total weight can be reduced significantly. For example, with six HP turbochargers, the total weight of the HP turbochargers may be only about 40% of that of an equivalent single HP turbocharger. Since each HP turbocharger is smaller, the total inertia of the HP stage can be considerably reduced. Thus the six HP turbochargers can have about 1% of the inertia of the equivalent single HP turbocharger. This in turn strongly decreases turbo-lag.

A further advantage of adopting relatively large numbers of small parallel HP turbochargers is that small turbochargers, being manufactured in greater numbers, are generally available at lower prices than larger turbochargers. Thus, although the HP stage contains more turbochargers, the overall cost can be reduced.

Alternatively, if the size of the turbines of the parallel HP turbochargers is increased (e.g. by about 25% relative to the smaller HP turbochargers), strong efficiency benefits can be generated while keeping the HP inertia to within about 2% of that of the equivalent single HP turbocharger.

Thus, the number of HP turbochargers can be such that their overall weight and inertia is low, but there are not so many of them that the size of each HP turbocharger becomes too small to be efficient or the cost of providing connections between the LP turbocharger and the HP turbochargers becomes too high.

Typically, the assembly has an air capacity that can provide at least 3 kg/sec of compressed air at full engine load. More typically, the assembly has an air capacity that can provide at least 5 kg/sec of compressed air at full engine load.

Typically, the assembly can provide a pressure ratio between the compressor inlet of the LP turbocharger and the compressor outlets of the HP turbochargers of at least eight at full engine load. More typically, the assembly can provide a pressure ratio between the compressor inlet of the LP turbocharger and the compressor outlets of the HP turbochargers of at least ten at full engine load.

Preferably, one or more of the HP turbochargers can be controllably switched on-line and off-line to vary the compressor and turbine characteristics of the assembly, and particularly the HP stage. For example, each of the switchable HP turbochargers may have a valve controlling the flow of exhaust gas to its turbine inlet or from its turbine outlet and thereby changing its on-line or off-line status. Additionally or alternatively, each of the switchable HP turbochargers may have a valve controlling the flow of compressed gas to its compressor inlet or from its compressor outlet and thereby changing its on-line or off-line status.

The ability to vary the compressor and turbine characteristics of the assembly in this way can be used, advantageously, to exert engine control at low loads, particularly when Miller timing is used.

The valve can be a butterfly valve, globe valve or gate valve. Such valves can perform reliably even when exposed to ash deposits. In general, compared to a single variable geometry HP turbine having movable stator vanes, the switchable parallel HP turbochargers are more robust and have improved ash deposit tolerance.

Typically, each HP turbocharger has a waste gate allowing exhaust gas to bypass its turbine. Typically, the LP turbocharger has a waste gate allowing exhaust gas to bypass its turbine.

Typically, an air bypass from the compressor outlet to the turbine inlet of each HP turbocharger is provided. The air bypass can be controlled by a valve or valves.

The assembly may further have one or more intercoolers operatively connecting the compressor outlet of the LP turbocharger to the compressor inlets of the HP turbochargers. The intercooler(s) can significantly increase the performance of the assembly. Additionally, for enhanced control, the assembly can have a diverter line or lines in parallel with the intercooler(s) allowing the intercooler(s) to be bypassed.

The assembly may further have one or more charge air coolers operatively connecting the compressor outlets of the HP turbochargers to, in use, the combustion chamber(s) of an internal combustion engine. The charge air coolers(s) can also significantly increase the performance of the assembly.

Some engines may be fitted with more than one of the two-stage turbocharger assemblies. For example, a V-engine could have two assemblies, one on each side of the engine. In such an arrangement, intercooler(s) and/or charge air coolers(s) can be shared by the assemblies.

Preferably, the HP turbochargers are substantially identical to each other. This can further help to reduce the cost of the assembly.

The high pressure turbochargers can be adapted to be mounted at the cylinder head of an internal combustion engine. Particularly when relatively small HP turbochargers are adopted, the size of the HP turbochargers allows them to be mounted at this position, conveniently allowing the length of conduits operatively connecting the engine's combustion chamber(s) from the HP turbochargers' compressor outlets and turbine inlets to be reduced.

For example, each HP turbocharger may be adapted to send compressed gas to and receive exhaust gas from one or more respective combustion chambers of the internal combustion engine, the HP turbochargers being arranged in the assembly so that each HP turbocharger is adjacent its respective chamber(s) when mounted at the cylinder head, and the HP turbochargers being divided into two or more groups, the HP turbochargers of each group not serving the combustion cylinder(s) of the other group(s). Preferably, each group includes one or more of the switchable HP turbochargers, whereby engine control can be applied to all the combustion cylinders of the engine.

Alternatively, when the assembly has an intercooler, the HP turbochargers can be mounted to the intercooler.

Alternatively, the HP turbochargers can be mounted to a casing of the LP turbocharger. For example, the LP turbocharger can have a turbine inlet that is axially aligned with the rotation axis of the LP turbocharger, and each HP turbocharger can have a turbine outlet that is axially aligned with the rotation axes of its HP turbocharger. Conveniently, the HP turbochargers can then be mounted to the casing of the LP turbocharger such that the HP turbine outlets are axially aligned with, or are at least within 30° of axial alignment with, and feed directly to the LP turbine inlet. This can provide a compact assembly with low pressure losses on the exhaust path between the HP and LP turbines. Although having the HP turbine outlets axially aligned with the LP turbine inlet typically produces a configuration with the lowest pressure losses, allowing the axes of the HP turbine outlets to lie at some small angle (i.e. up to 30°) from the axis of the LP turbine inlet can still provide low pressure losses while, in some cases, facilitating a more robust attachment of the HP turbochargers to the LP turbocharger and/or facilitating access to the attachment area.

A further aspect of the invention provides an internal combustion engine fitted with the two-stage turbocharger assembly of the first aspect. The engine may be capable of providing at least 3 MW of engine power.

For example, the engine may have a plurality of exhaust gas manifolds, each exhaust gas manifold sending exhaust gas to a respective subset of the high pressure turbochargers. Preferably, each subset includes one or more of the switchable HP turbochargers. When the HP turbochargers are adapted to be mounted at the cylinder head of the engine, the subsets may correspond to the aforementioned groups of HP turbochargers.

### Brief Description of the Drawings

Embodiments of the invention will now be described by way of example with reference to the accompanying drawings in which:
Figure 1 shows schematically the air side connections of a two-stage turbocharger assembly according to a first embodiment;
Figure 2 shows schematically the exhaust gas side connections of the two-stage turbocharger assembly according to the first embodiment;
Figure 3 shows schematically the exhaust gas side connections of a two-stage turbocharger assembly according to a second embodiment;
Figure 4 shows schematically the exhaust gas side connections of a two-stage turbocharger assembly according to a third embodiment;
Figure 5 shows schematically the exhaust gas side connections of a two-stage turbocharger assembly according to a fourth embodiment;
Figure 6 shows schematically the air and exhaust side connections of a two-stage turbocharger assembly according to a fifth embodiment; and
Figure 7 shows a schematic perspective view of a mounting arrangement of a two-stage turbocharger assembly.

### Detailed Description

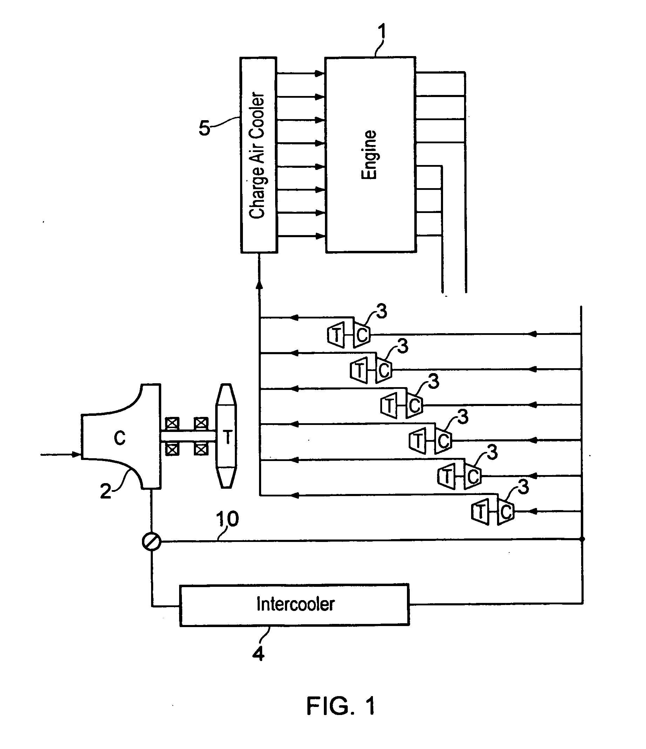

Figure 1 shows schematically the air side connections of a two-stage turbocharger assembly according to a first embodiment, the assembly being fitted to an internal combustion engine 1. Arrowed lines indicate the flow of air through the assembly.

The assembly has an LP turbocharger 2 and six parallel identical HP turbochargers 3. The compressors of the LP and HP turbochargers are denoted C, and the turbines of the LP and HP turbochargers are denoted T. Air from an engine intake (not shown) enters the compressor inlet of the LP turbocharger. On exiting the compressor outlet of the LP turbocharger, the compressed air passes through intercooler 4 and travels to the compressor inlets of the HP turbochargers. Further compressed air then exits the compressor outlets of the HP turbochargers, passes through charge air cooler 5, and enters the combustion chambers (not shown) of engine 1.

A diverter line 10 in parallel with the intercooler 4 allows the intercooler to be bypassed if desired. In a variant of the first embodiment, a diverter line is not provided.

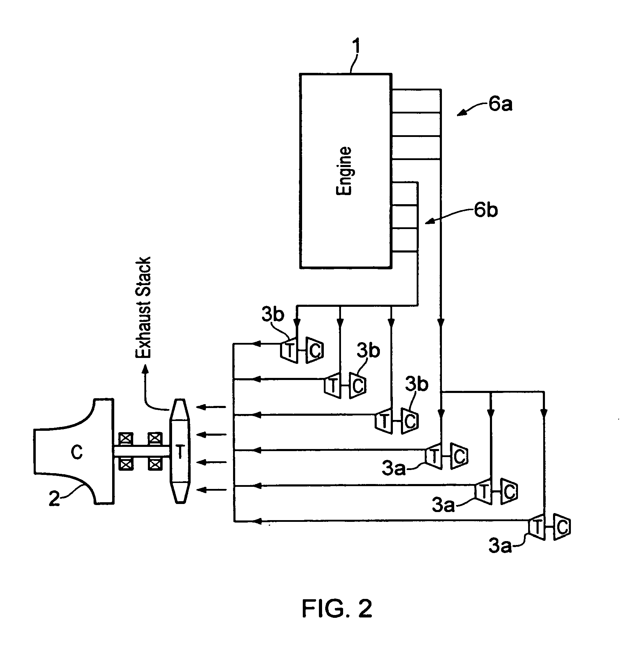

Figure 2 shows schematically the exhaust gas side connections of the two-stage turbocharger assembly according to the first embodiment. Arrowed lines in this case indicate the flow of exhaust gas through the assembly.

Exhaust gas exits the combustion chambers of engine 1 and enters either of two exhaust manifolds 6a, 6b. The exhaust gas from manifold 6a enters the turbine inlets of a first subset of three HP turbochargers 3a, while the exhaust gas from manifold 6d enters the turbine inlets of a second, different subset of three HP turbochargers 3b. As the manifolds accept exhaust gas from different combustion cylinders, the effect is that the HP turbochargers of each subset do not serve the combustion cylinders of the other subset. On exiting the turbine outlets of the HP turbochargers the exhaust gas travels to the turbine inlet of the LP turbocharger 2. It then exits the turbine outlet of the LP turbocharger and is sent to the engine exhaust stack (not shown).

By having a large number of relatively small HP turbochargers, turbo-lag in the HP stage can be reduced. Further, the small, identical HP turbochargers are relatively cheap to source, reducing the cost of the assembly.

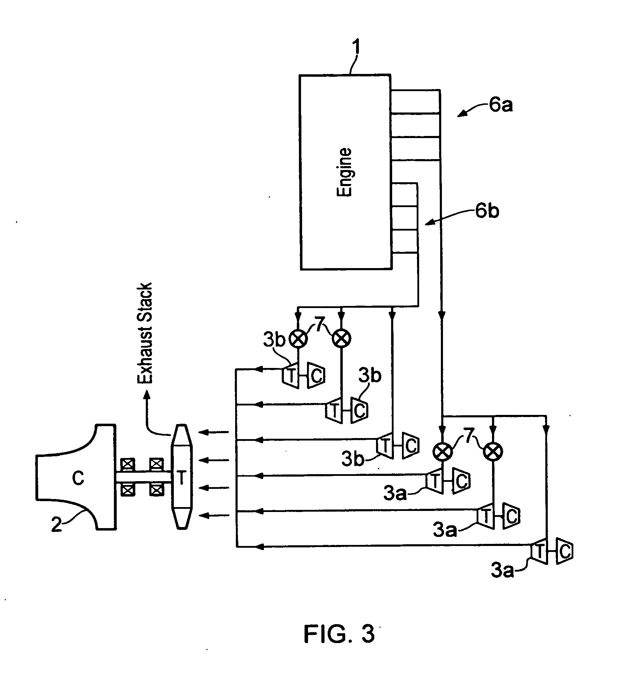

Figure 3 shows schematically the exhaust gas side connections of a two-stage turbocharger assembly according to a second embodiment. Reference numbers in common indicate features equivalent to those of the first embodiment.

The exhaust side connections are identical to those shown in Figure 2, except that two of the three HP turbochargers of each subset has an isolation valve 7, such as a butterfly valve, which controls the flow of exhaust gas to the respective turbine inlet. Alternatively, the valve may be positioned at the turbine outlet. Each HP turbocharger with a valve 7 also has a further isolation valve (not shown) which controls the flow of compressed air to its compressor inlet or from its compressor outlet. When both valves of an HP turbocharger are closed, the turbocharger is effectively isolated and taken off-line. Thus control of the valves allows those HP turbochargers with valves to be controllably switched on-line and off-line. This switching varies the compressor and turbine characteristics of the assembly, and particularly the HP stage, and allows engine control to be exerted at low loads, which is particularly useful in conjunction with the adoption of Miller timing. Robust valve designs, such as butterfly valves, globe valves or gate valves, can be advantageously adopted, particularly on the exhaust side, as they are resistant to performance degradation from ash deposits.

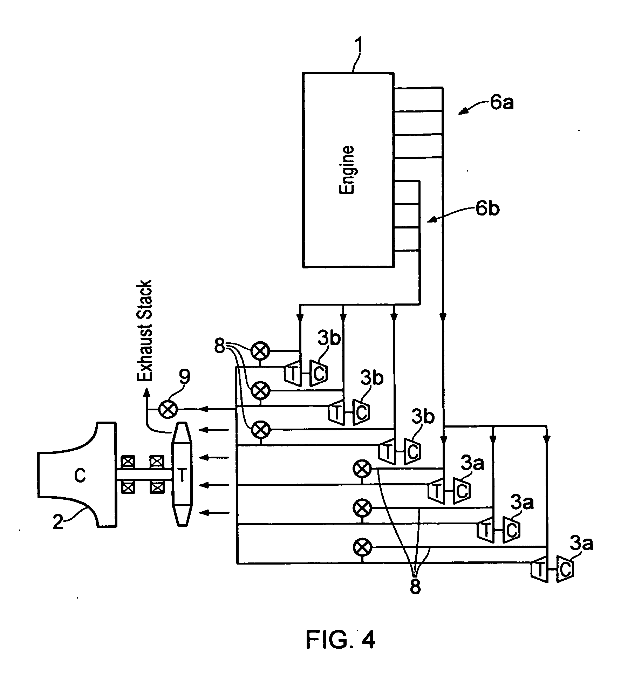

Figure 4 shows schematically the exhaust gas side connections of a two-stage turbocharger assembly according to a third embodiment. Reference numbers in common indicate features equivalent to those of the first and second embodiment.

The exhaust side connections are identical to those shown in Figure 2, except that waste gates 8 allow exhaust gas to bypass the turbines of the HP turbochargers 3a, 3b, and a further waste gate 9 allows exhaust gas to bypass the turbine of the LP turbocharger. Similar waste gates can be applied to the second embodiment.

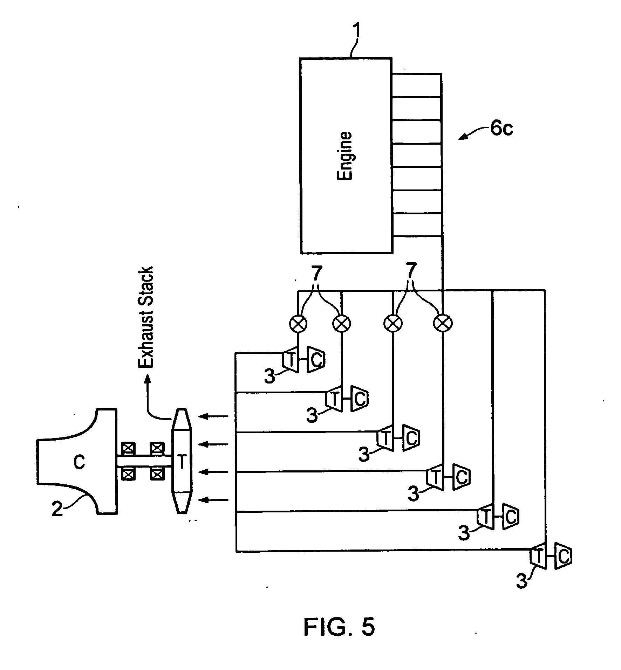

Figure 5 shows schematically the exhaust gas side connections of a two-stage turbocharger assembly according to a fourth embodiment. Reference numbers in common indicate features equivalent to those of the previous embodiments.

In this embodiment, exhaust gas exits the combustion chambers of engine 1 and enters a single exhaust manifold 6c. From there it travels to six HP turbochargers 3. Four of the HP turbochargers have isolation valves 7 at the inlets to their turbines, and corresponding further isolation valves (not shown) at the inlets to their compressors. Again, control of the valves allows those HP turbochargers with valves to be controllably switched on-line and off-line.

The HP and LP turbochargers can be provided with respective waste gates.

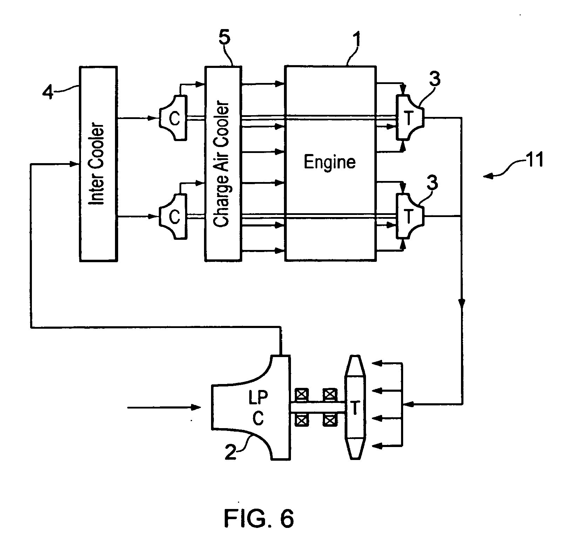

Figure 6 shows schematically the air and exhaust side connections of a two-stage turbocharger assembly according to a fifth embodiment. Reference numbers in common indicate features equivalent to those of the previous embodiments.

The fifth embodiment employs more than two HP turbochargers 3, although, for simplicity, only two HP turbochargers are shown in Figure 6.

The HP turbochargers, being relatively small, are mounted at the cylinder head of engine 1. A limited number of cylinders (e.g. from 1 to 3) feeds each HP turbocharger, which does not receive exhaust gas from the cylinders of the other HP turbochargers. The HP turbochargers can therefore be positioned in proximity to their respective cylinders, where they can be closely coupled with the engine's valves.
Further, the lengths of the conduits connecting the cylinders with the HP turbochargers' compressor outlets and turbine inlets can be reduced.

An intermediate manifold 11 then joins the turbine outlets of the HP turbochargers to the turbine inlet of the LP turbocharger. Advantageously, this manifold is at a lower temperature and pressure and will experience less severe pulsations than manifolds 6a to c of the previous embodiments, leading to lower losses and improved performance.

Instead of a single HP turbocharger serving each limited number of cylinders, more than one HP turbocharger can serve the respective cylinders. A manifold is then needed to distribute the exhaust gas to each group of HP turbochargers. However, some of the HP turbochargers of each group can be provided with isolation valves, allowing turbocharger switching and variation of the compressor and turbine characteristics of the assembly.

In the fifth embodiment, the HP turbochargers 3 and LP turbocharger 2 can be provided with respective waste gates. A diverter line can be provided to controllably bypass intercooler 4.

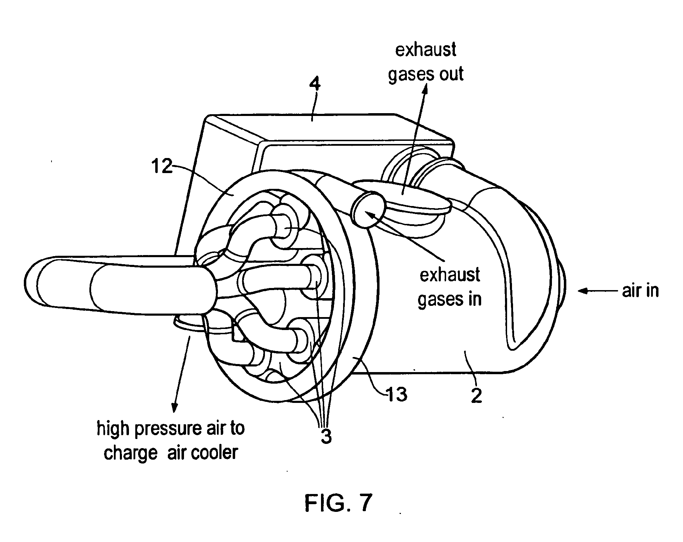

Figure 7 shows a schematic perspective view of a mounting arrangement for a two-stage turbocharger assembly. The mounting arrangement is suitable for putting into practice, the turbocharger assemblies of the first to fourth embodiments.

The mounting arrangement comprises the LP turbocharger 2 and six parallel identical HP turbochargers 3. The LP turbocharger has a turbine inlet that is axially aligned with the rotation axis of the LP turbocharger, and each HP turbocharger has a turbine outlet that is axially aligned with the rotation axes of its HP turbocharger. The rotation axes of the LP and HP turbochargers are parallel, with the HP turbochargers being mounted to the casing of the LP turbocharger such that the exhaust gases flowing axially out of the HP turbine are naturally aligned with and feed directly into the inlet of the LP turbine. This close coupling of the HP and LP turbines can reduce pressure losses on the exhaust path between the HP and LP turbines. Further, since the LP turbocharger is a relatively large turbocharger, it forms a stable base for mounting the HP turbochargers.

The LP turbocharger 2 compressed air feeds into the intercooler 4 and thence to the axial inlets of the six HP compressors 3. The HP compressed air feeds tangentially into the volute 12 which discharges to the charge air cooler (not shown) on the engine (also not shown). Engine exhaust gases feed into the volute 13 which leads to the tangential inflow connection (not clearly visible) of the HP turbines. As discussed above, the HP turbine outlet is closely coupled to the LP turbine inlet. Exhaust from the LP turbine exhausts nearly vertically upwards in the view of Figure 7.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A two-stage turbocharger assembly for an internal combustion engine (1), the assembly having:
a low pressure turbocharger (2), and
a plurality of high pressure turbochargers (3; 3a, 3b) arranged in parallel with each other, the compressor outlet of the low pressure turbocharger being operatively connected to the compressor inlets of the high pressure turbochargers, and the turbine outlets of the high pressure turbochargers being operatively connected to the turbine inlet of the low pressure turbocharger;
**characterised in that** the assembly has more than two of the high pressure turbochargers.

2. A two-stage turbocharger assembly according to claim 1 having four or more, and preferably six or more, of the high pressure turbochargers.

3. A two-stage turbocharger assembly according to claim 1 or 2 wherein one or more of the high pressure turbochargers can be controllably switched on-line and off-line to vary the compressor and turbine characteristics of the assembly.

4. A two-stage turbocharger assembly according to claim 3 wherein each of the switchable high pressure turbochargers has a valve (7) controlling the flow of exhaust gas to its turbine inlet or from its turbine outlet and thereby changing its on-line or off-line status.

5. A two-stage turbocharger assembly according to claim 3 or 4 wherein each of the switchable high pressure turbochargers has a valve controlling the flow of compressed gas to its compressor inlet or from its compressor outlet and thereby changing its on-line or off-line status.

6. A two-stage turbocharger assembly according to claim 4 or 5 wherein the valve is a butterfly valve, globe valve or gate valve.

7. A two-stage turbocharger assembly according to any one of the previous claims wherein each high pressure turbocharger has a waste gate (8) allowing exhaust gas to bypass its turbine.

8. A two-stage turbocharger assembly according to any one of the previous claims wherein the low pressure turbocharger has a waste gate (9) allowing exhaust gas to bypass its turbine.

9. A two-stage turbocharger assembly according to any one of the previous claims further having one or more intercoolers (4) operatively connecting the compressor outlet of the low pressure turbocharger to the compressor inlets of the high pressure turbochargers, and optionally further having a diverter line or lines (10) in parallel with the intercooler(s) allowing the intercooler(s) to be bypassed.

10. A two-stage turbocharger assembly according to any one of the previous claims further having one or more charge air coolers (5) operatively connecting the compressor outlets of the high pressure turbochargers to, in use, the combustion chamber(s) of an internal combustion engine.

11. A two-stage turbocharger assembly according to any one of the previous claims wherein the high pressure turbochargers are substantially identical to each other.

12. A two-stage turbocharger assembly according to any one of the previous claims wherein the high pressure turbochargers are adapted to be mounted at the cylinder head of an internal combustion engine.

13. A two-stage turbocharger assembly according to claim 12 wherein each high pressure turbocharger is adapted to send compressed gas to and receive exhaust gas from one or more respective combustion chambers of the internal combustion engine, the high pressure turbochargers being arranged in the assembly so that each high pressure turbocharger is adjacent its respective chamber(s) when mounted at the cylinder head, and the high pressure turbochargers being divided into two or more groups, the high pressure turbochargers of each group not serving the combustion cylinder(s) of the other group(s).

14. A two-stage turbocharger assembly according to claim 13 as dependent on claim 3 wherein each group includes one or more of the switchable high pressure turbochargers.

15. An internal combustion engine fitted with the two-stage turbocharger assembly of any one of the previous claims.

16. An internal combustion engine according to claim 15 having a plurality of exhaust gas manifolds (6a, 6b), each exhaust gas manifold sending exhaust gas to a respective subset of the high pressure turbochargers (3a, 3b).

17. An internal combustion engine according to claim 16 as dependent on claim 3 wherein each subset includes one or more of the switchable high pressure turbochargers.

## Patentansprüche

1. Zweistufige Turboladeranordnung für einen Verbrennungsmotor (1), wobei die Anordnung Folgendes aufweist:
einen Niederdruckturbolader (2) und
eine Vielzahl an Hochdruckturboladern (3; 3a, 3b), die parallel zueinander angeordnet sind, wobei der Kompressorauslass des Niederdruckturboladers mit den Kompressoreinlässen der Hochdruckturbolader operativ verbunden ist und die Turbinenauslässe der Hochdruckturbolader mit dem Turbineneinlass des Niederdruckturboladers operativ verbunden sind;
**dadurch gekennzeichnet, dass** die Anordnung mehr als zwei Hochdruckturbolader aufweist.

2. Zweistufige Turboladeranordnung nach Anspruch 1 mit vier oder mehr und vorzugsweise sechs oder mehr Hochdruckturboladern.

3. Zweistufige Turboladeranordnung nach Anspruch 1 oder 2, worin ein oder mehrere Hochdruckturbolader steuerbar zu- oder weggeschaltet werden können, um die Kompressor- und Turbineneigenschaften der Anordnung variieren zu können.

4. Zweistufige Turboladeranordnung nach Anspruch 3, worin jeder der schaltbaren Hochdruckturbolader ein Ventil (7) aufweist, das den Strom des Abgases zu seinem Turbineneinlass oder von seinem Turbinenauslass steuert und dadurch den zugeschalteten oder weggeschalteten Status ändert.

5. Zweistufige Turboladeranordnung nach Anspruch 3 oder 4, worin jeder der schaltbaren Hochdruckturbolader ein Ventil aufweist, dass den Strom von komprimiertem Gas zu seinem Turbineneinlass oder von seinem Turbinenauslass steuert und dadurch den zugeschalteten oder weggeschalteten Status ändert.

6. Zweistufige Turboladeranordnung nach Anspruch 4 oder 5, worin das Ventil eine Klappe, ein Ventil oder ein Schieber ist.

7. Zweistufige Turboladeranordnung nach einem der vorangegangenen Ansprüche, worin jeder der Hochdruckturbolader ein Ladedruckregelventil (8) aufweist, das ermöglicht, dass das Abgas an seiner Turbine vorbeigeleitet wird.

8. Zweistufige Turboladeranordnung nach einem der vorangegangenen Ansprüche, worin der Niederdruckturbolader ein Ladedruckregelventil (9) aufweist, das ermöglicht, dass das Abgas an seiner Turbine vorbeigeleitet wird.

9. Zweistufige Turboladeranordnung nach einem der vorangegangenen Ansprüche, die ferner einen oder mehrere Zwischenkühler (4) aufweist, der/die den Kompressorauslass des Niederdruckturboladers mit den Kompressoreinlässen der Hochdruckturbolader operativ verbindet/verbinden, und gegebenenfalls ferner eine oder mehrere Abblasleitungen (10) parallel zu dem Zwischenkühler/den Zwischenkühlern aufweist, wodurch ein Umgehen des Zwischenkühlers/der Zwischenkühler ermöglicht wird.

10. Zweistufige Turboladeranordnung nach einem der vorangegangenen Ansprüche, die ferner einen oder mehrere Ladeluftkühler (5) aufweist, der/die die Kompressorauslässe der Hochdruckturbolader in Betrieb mit der Brennkammer/den Brennkammern des Verbrennungsmotors operativ verbindet/verbinden.

11. Zweistufige Turboladeranordnung nach einem der vorangegangenen Ansprüche, worin die Hochdruckturbolader im Wesentlichen ident sind.

12. Zweistufige Turboladeranordnung nach einem der vorangegangenen Ansprüche, worin die Hochdruckturbolader geeignet sind, um am Zylinderkopf eines Verbrennungsmotors angebracht zu werden.

13. Zweistufige Turboladeranordnung nach Anspruch 12, worin jeder Hochdruckturbolader geeignet ist, Druckluft in eine oder mehrere entsprechende Verbrennungskammern des Verbrennungsmotors zu leiten und Abgas von diesen aufzunehmen, wobei die Hochdruckturbolader in der Anordnung so angeordnet sind, dass jeder Hochdruckturbolader benachbart in Bezug auf die entsprechende/n Kammer/n vorliegt, wenn er an dem Zylinderkopf angebracht ist, und wobei die Hochdruckturbolader in zwei oder mehr Gruppen unterteilt sind, wobei die Hochdruckturbolader jeder Gruppe nicht für den/die Brennzylinder der anderen Gruppe/n arbeiten.

14. Zweistufige Turboladeranordnung nach Anspruch 13 in Abhängigkeit von Anspruch 3, worin jede Gruppe einen oder mehrere schaltbare Hochdruckturbolader umfasst.

15. Verbrennungsmotor, der mit einer zweistufigen Turboladeranordnung nach einem der vorangegangenen Ansprüche ausgestattet ist.

16. Verbrennungsmotor nach Anspruch 15 mit einer Vielzahl an Abgassammlern (6a, 6b), wobei jeder Abgassammler Abgas in eine entsprechende Untergruppe von Hochdruckturboladern (3a, 3b) leitet.

17. Verbrennungsmotor nach Anspruch 16 in Abhängigkeit von Anspruch 3, worin jede Untergruppe einen oder mehrere schaltbare Hochdruckturbolader umfasst.

## Revendications

1. Ensemble turbo-compresseur bi-étage pour un moteur à combustion interne (1), l'ensemble ayant:
un turbo-compresseur basse pression (2), et
plusieurs turbo-compresseurs haute pression (3; 3a, 3b) agencés parallèlement les uns aux autres, la sortie de compresseur du turbo-compresseur basse pression étant fonctionnellement reliée aux entrées de compresseur des turbo-compresseurs haute pression, et les sorties de turbine des turbo-compresseurs haute pression étant fonctionnellement reliées à l'entrée de turbine du turbo-compresseur basse pression;
**caractérisé en ce que** l'ensemble comporte plus que deux des turbo-compresseurs haute pression.

2. Ensemble turbo-compresseur bi-étage selon la revendication 1, comportant quatre ou plus, et de préférence six ou plus, des turbo-compresseurs haute pression.

3. Ensemble turbo-compresseur bi-étage selon la revendication 1 ou 2, où un ou plusieurs des turbo-compresseurs haute pression peuvent être commutés de manière contrôlable en ligne et hors ligne pour faire varier les caractéristiques de compresseur et de turbine de l'ensemble.

4. Ensemble turbo-compresseur bi-étage selon la revendication 3, où chacun des turbo-compresseurs haute pression commutables possède une vanne (7) commandant l'écoulement des gaz d'échappement à son entrée de turbine ou depuis sa sortie de turbine en changeant ainsi son état en ligne ou hors ligne.

5. Ensemble turbo-compresseur bi-étage selon la revendication 3 ou 4, où chacun des turbo-compresseurs haute pression commutables possède une vanne commandant l'écoulement du gaz comprimé à son entrée de compresseur ou de sa sortie de compresseur en changeant ainsi son état en ligne ou hors ligne.

6. Ensemble turbo-compresseur bi-étage selon la revendication 4 ou 5, où la vanne est une vanne papillon, une vanne globe ou une vanne porte.

7. Ensemble turbo-compresseur bi-étage selon l'une quelconque des revendications précédentes, où chaque turbo-compresseur haute pression possède une vanne de décharge (8) permettant aux gaz d'échappement de contourner sa turbine.

8. Ensemble turbo-compresseur bi-étage selon l'une quelconque des revendications précédentes, où le turbo-compresseur basse pression possède une vanne de décharge (9) permettant aux gaz d'échappement de contourner sa turbine.

9. Ensemble turbo-compresseur bi-étage selon l'une quelconque des revendications précédentes, comportant en outre un ou plusieurs refroidisseurs intermédiaires (4) reliant fonctionnellement la sortie du compresseur du turbo-compresseur basse pression aux entrées de compresseur des turbo-compresseurs haute pression, et comportant en option en outre une ou des lignes de diversion (10) parallèles aux refroidisseurs intermédiaires permettant aux refroidisseurs intermédiaires d'être contournés.

10. Ensemble turbo-compresseur bi-étage selon l'une quelconque des revendications précédentes, comportant en outre un ou plusieurs refroidisseurs d'air de charge (5) reliant fonctionnellement les sorties de compresseur des turbo-compresseurs haute pression, en cours d'utilisation, à la ou aux chambres de combustion d'un moteur à combustion interne.

11. Ensemble turbo-compresseur bi-étage selon l'une quelconque des revendications précédentes, où les turbo-compresseurs haute pression sont sensiblement identiques les uns aux autres.

12. Ensemble turbo-compresseur bi-étage selon l'une quelconque des revendications précédentes, où les turbo-compresseurs haute pression sont aptes à être montés à la culasse d'un moteur à combustion interne.

13. Ensemble turbo-compresseur bi-étage selon la revendication 12, où chaque turbo-compresseur haute pression est apte à envoyer du gaz comprimé à et à recevoir des gaz d'échappement d'une ou de plusieurs chambres de combustion respectives du moteur à combustion interne, les turbo-compresseurs haute pression étant agencés dans l'ensemble de façon que chaque turbo-compresseur haute pression soit adjacent à sa ou ses chambres respectives lorsqu'il est installé à la culasse, et les turbo-compresseurs haute pression étant divisés en deux ou plusieurs groupes, les turbo-compresseurs haute pression de chaque groupe ne servant pas au ou aux cylindres de combustion du ou des autres groupes.

14. Ensemble turbo-compresseur bi-étage selon la revendication 13 dépendant de la revendication 3, où chaque groupe comprend un ou plusieurs turbo-compresseurs haute pression commutables.

15. Moteur à combustion interne équipé de l'ensemble turbo-compresseur bi-étage selon l'une quelconque des revendications précédentes.

16. Moteur à combustion interne selon la revendication 15, comportant une pluralité de collecteurs de gaz d'échappement (6a, 6b), chaque collecteur de gaz d'échappement émettant des gaz d'échappement vers un sous-ensemble respectif des turbo-compresseurs haute pression (3a, 3b).

17. Moteur à combustion interne selon la revendication 16 dépendant de la revendication 3, où chaque sous-ensemble comprend un ou plusieurs des turbo-compresseurs haute pression commutables.
